# EUROPÄISCHE PATENTSCHRIFT

(11) **EP 2 067 187 B1**
(45) Veröffentlichungstag und Bekanntmachung des Hinweises auf die Patenterteilung: **09.11.2011**
(21) Anmeldenummer: 07820307.2
(22) Anmeldetag: 18.09.2007
(51) Int. Cl.: H01L 41/09

(54) **FESTKÖRPERAKTOR-ANTRIEBSVORRICHTUNG**
SOLID-STATE ACTUATOR DRIVE APPARATUS
DISPOSITIF D'ENTRAÎNEMENT D'ACTIONNEUR DE CORPS FIXE

(30) Priorität: 26.09.2006 DE 102006045293
(43) Veröffentlichungstag der Anmeldung: 10.06.2009
(73) Patentinhaber: Noliac A/S, 3490 Kvistgaard (DK)
(72) Erfinder: GOTTLIEB, Bernhard, 81739 München (DE); KAPPEL, Andreas, 85649 Brunnthal (DE); SCHWEBEL, Tim, 80337 München (DE); WALLENHAUER, Carsten, 01987 Schwarzheide (DE)
(74) Vertreter: Inspicos A/S
(86) Internationale Anmeldenummer: PCT/EP2007/059855
(87) Internationale Veröffentlichungsnummer: WO 2008/037633

(56) Entgegenhaltungen:
- EP-A- 1 098 429
- EP-A- 1 143 535
- WO-A-97/26702
- DE-A1- 1 613 087
- DE-U1- 9 414 601
- US-A- 5 079 471

## Beschreibung

Die Erfindung bezieht sich auf eine Festkörperaktor-Antriebsvorrichtung mit den oberbegrifflichen Merkmalen gemäß Patentanspruch 1.

Aus EP 1 098 429 B1 ist ein elektromechanischen Motor mit einer Festkörperaktor-Antriebsvorrichtung bekannt. Eine drehbar gelagerte Welle mit einem ersten Durchmesser wird von einem Antriebskörper mit einer Antriebskörperöffnung in Form einer zylindrischen Bohrung umfasst. Eine Wellenoberfläche der Welle kann auf der Innenfläche der Antriebskörperöffnung, die einen gegenüber dem ersten Durchmesser etwas größeren zweiten Durchmesser aufweist, abrollen. Eine Wellenachse der Welle und eine zentrale Achse der Antriebskörperöffnung sind dabei parallel zueinander ausgerichtet. Die Abrollbewegung und damit die Rotation der Welle werden durch eine kreisförmige Verschiebebewegung des Antriebskörpers bzw. von dessen Achse parallel zur Wellenachse hervorgerufen. Die kreisförmige Relativbewegung zwischen der Achse der Antriebskörperöffnung und der Wellenachse wird im einfachsten Falle von zwei insbesondere voneinander unabhängig betreibbaren elektromechanischen Aktoren in Form von Linearaktoren erzeugt, deren Wirkrichtungen, d.h. Richtungen der genutzten Längenänderung, orthogonal zueinander liegen. Die Aktoren sind im einfachsten Fall so angeordnet, dass ihre Wirkrichtungen eine Ebene senkrecht zur Wellenachse bzw. zur Ringbohrungsachse aufspannen. Durch eine geeignete elektrische Ansteuerung der Aktoren wird einer der Aktoren zu einer sinusförmigen Auslenkung und der andere Aktor zu einer kosinusförmigen Auslenkung gleicher Frequenz und Amplitude als Funktion der Zeit angeregt. Die Auslenkungsamplitude übertrifft dabei betragsmäßig die Hälfte der Durchmesserdifferenz des ersten und des zweiten Durchmessers, damit die Durchmesserdifferenz zwischen der Antriebskörperöffnung und der Welle sicher überwunden wird. Solange sich die Linearbewegungen der beiden Linearaktoren unabhängig voneinander überlagern, werden in Summe Antriebskörper und Welle kreisförmig gegeneinander verschoben und die drehbar gelagerte Welle rotiert.

Liegt an der Welle eine Drehmomentlast an, so erfolgt eine Kraftübertragung zwischen Antriebskörper und Welle bei der beschriebenen Ausführungsform durch Reibschluss. Die Kraftübertragung kann durch Einführung einer Verzahnung verbessert werden. Da in diesem Fall kein Schlupf mehr auftreten kann, wird zusätzlich eine sehr hohe Stellgenauigkeit und Reproduzierbarkeit des Stellvorganges erzielt.

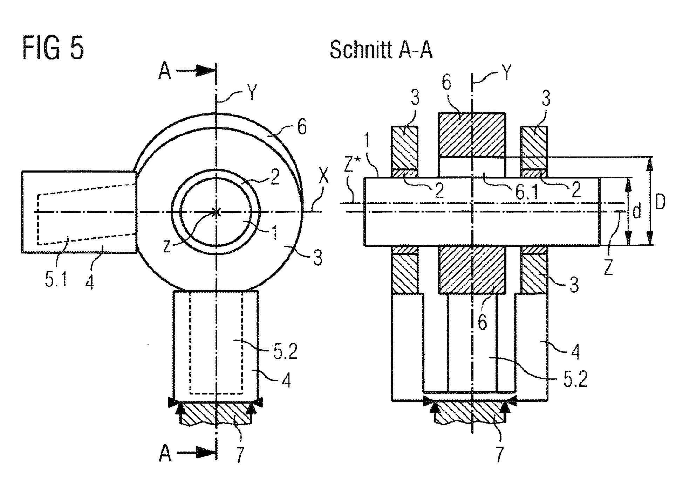

In Fig. 5 wird stark abstrahiert der prinzipielle Aufbau einer Ausführungsform gemäß dem Stand der Technik gezeigt. Die Kraftübertragung zwischen Antriebskörperöffnung und Welle kann dabei reibschlüssig oder formschlüssig erfolgen.

Eine Welle 1 ist durch zwei radial steife Drehlager 2, z.B. Gleitlager, Kugel- oder Nadellager, in jeweils einem Lagerhalter 3 drehbar gelagert. Die beiden Lagerhalter 3 werden über zwei Brückenelemente 4 steif verbunden. Jedes Brückenelement 4 stellt ein Auflager für einen Aktor bereit. Die beiden Aktoren 5.1, 5.2 werden nachfolgend bezeichnet als X-Aktor für eine Bewegung in einer ersten Richtung X senkrecht zu einer Wellenachse Z und als Y-Aktor für eine Bewegung in einer zweiten Richtung Y senkrecht zu der Wellenachse Z und senkrecht zu der ersten Richtung X. Beide Aktoren 5.1, 5.2 sind auflagerseitig mechanisch steif mit den zugehörigen Brückenelementen 4 verbunden. In der praktischen Motorkonstruktion werden die Funktionselemente, d.h. die Lagerhalter und Brückenelemente, bevorzugt als Bestandteile eines ein- oder mehrteiligen Motorgehäuses ausgebildet. Eine durch Dreiecke symbolisierte, mechanisch steife Anbindung eines der Brückenelemente 4 an einen nicht dargestellten Motorhalter, wie z.B. einem Gestell oder einem Maschinenbett, ist daher sinngemäß als Befestigung an einem Motorgehäuse bzw. einem Trägerelement zu verstehen. An ihrem antriebseitigen Ende werden die Aktoren 5.1, 5.2 mechanisch steif mit einem Antriebskörper 6 mit einer Antriebskörperöffnung 6.1 in Form einer zylindrischen Bohrung verbunden. Die Welle 1 führt durch die Antriebskörperöffnung 6.1 hindurch oder in diese hinein.

Bei einer solchen Ausführung kann im Motorbetrieb das Motorgehäuse mit den Drehlagern 2 und der Welle 1 als ruhend bezüglich Translation und der Antriebskörper 6 als bewegt betrachtet werden.

In Fig. 5 ist die momentane Situation dargestellt, in welcher der Y-Aktor 5.2 gerade maximal ausgelenkt ist und der Antriebskörper 6 in der Zeichnung unten an der Welle 1 anliegt. In der linken Abbildung, einer Draufsicht, ist daher der verdeckt eingezeichnete X-Aktor 5.1 verbogen dargestellt. Diese Darstellung ist zur Veranschaulichung des Prinzips bewusst stark überzeichnet. Für die inder Praxis als Aktoren zum Einsatz kommenden Festkörperaktoren gilt, dass eine Aktorauslenkung a nur etwa 1'- 2 Promille der Aktorlänge erreicht. Bei einer derzeit typischen Aktorlänge von ca. 30 mm werden maximal a = 60 µm Aktorauslenkung erzielt. Unter Berücksichtigung der notwendigen Voraussetzung, dass die Aktorauslenkung a die Durchmesserdifferenz zwischen einem zweiten Durchmesser D der Antriebskörperöffnung 6.1 und einem Wellendurchmesser d der Welle 1 übersteigen muss, also a > (D - d) gilt, wird klar, dass die "Verbiegung" der Aktoren 5.1, 5.2 senkrecht zu ihrer Wirkrichtung vernachlässigbar gering bleibt.

An elektromechanischen Motoren dieser Bauart und unter Verwendung einer formschlüssigen Kraftübertragung zwischen Antriebskörper 6 und Welle 1 wurden bereits Drehmomente von bis zu 2 Nm an der Welle 1 abgegriffen und gemessen. Das Lastdrehmoment wird hierbei von der Welle 1 insbesondere formschlüssig an den Antriebskörper 6 übertragen, gelangt von dort über die Aktoren an das Motorgehäuse bzw. die Brückenelemente und wird schließlich an den Motorhalter 7 abgeleitet. Da die Welle 1 drehbar gelagert in das Motorgehäuse bzw. in die Lagerhalter eingebaut ist, kann an den Lagerstellen prinzipbedingt keine Drehmomentübertragung erfolgen.

Infolgedessen muss die gesamte Last eines wirkenden Drehmoments M von den Aktoren 5.1, 5.2 aufgenommen und abgeleitet werden. Hierdurch werden die Aktoren 5.1, 5.2 erheblich auf Biegung beansprucht. Viele bekannte und neue Aktormaterialien und insbesondere derzeit eingesetzte keramische piezoelektrische Vielschichtaktoren verhalten sich mechanisch spröde. Insbesondere bei hohen Drehmomentlasten kann es daher im Aktorwerkstoff zunächst zur Rissbildung und später bis zum Ausfall durch Bruch kommen.

Die Beanspruchung auf Biegung bringt mit sich, dass ein Teil des Aktormaterials unter Zugspannung und ein Teil des Aktormaterials unter Druckspannung gesetzt wird. Insbesondere Zugspannungen wirken stark schädigend auf spröde Aktormaterialien, wie z.B. piezokeramische Werkstoffe. Im Gegensatz dazu besteht gegenüber Druckspannung eine hohe Festigkeit und Belastbarkeit dieser Werkstoffe.

Ein erster Lösungsansatz einer solchen Problematik besteht in einer paarweisen Anordnung von Linearaktoren, wie sie in der DE 10 2005 022 355 beschrieben ist. Eine Absenkung der durch Drehmomentlasten hervorgerufenen mechanischen Spannung in den Aktoren wird dabei durch die Erhöhung des Flächenträgheitsmomentes der Aktoranordnung erreicht.

Ein weiterer Lösungsansatz, der ebenfalls die Erhöhung des entsprechenden Flächenträgheitsmomentes nutzt, ist in der DE 10 2006 032 993 als ein Aufbau einer fertigungsgerechten Antriebseinheit für piezoelektrische Ringmotoren mittels piezoelektrischer Vielschichtaktoren mit rechteckigem Querschnitt beschrieben.

Weitere Lösungsansätze beschäftigen sich mit der effizienten Bereitstellung einer hohen mechanischen Druckvorspannung für die Aktoren, wobei die Druckvorspannung jedoch deren Auslenkung nicht oder nur unwesentlich behindern darf. Die bereitgestellte Druckvorspannung soll sich im Betrieb einstellende, überlagernde mechanische Zugspannungsanteile übertreffen, so dass in Summe bei allen denkbaren Betriebszuständen im Aktormaterial keine schädigende Zugspannung auftreten kann. Beschrieben werden solche Lösungsansätze in der DE 10 2006 032 995 als ein Vorspannsystem zur fertigungsgerechten mechanischen Druckvorspannung des Piezoaktoren im piezoelektrischen Stellantrieb und in der DE 10 2006 032 996 als ein umlaufender Federdraht zur fertigungsgerechten mechanischen Druckvorspannung der Piezoaktoren im piezoelektrischen Stellantrieb.

Eine Aufgabe der Erfindung besteht in der Bereitstellung einer Konstruktion einer Festkörperaktor-Antriebsvorrichtung, welche die Biegebelastung der insbesondere mechanisch spröden Aktoren, hervorgerufen durch Drehmomentlasten an der Motorwelle, reduziert oder völlig vermeidet.

Diese Aufgabe wird durch die eine Festkörperaktor-Antriebsvorrichtung mit den Merkmalen gemäß Anspruch 1 oder 2 gelöst. Vorteilhafte Ausgestaltungen sind Gegenstand von abhängigen Ansprüchen.

Die Erfindung beruht darauf, dass an der Welle angreifende Drehmomentlasten direkt an den Antriebskörper oder das Motorgehäuse, Lagerhalter, Brückenelemente etc. übertragen werden und von dort direkt an einen Motorhalter, z.B. ein Gestell oder ein Maschinenbett abgeleitet werden. Die Aktoren werden dabei vorteilhaft mittels geeignet angeordneter Drehlagerungen aus der Kette der Drehmoment übertragenden Elemente herausgehalten.

Bevorzugt wird demgemäß eine Festkörperaktor-Antriebsvorrichtung mit einer Welle, einem Drehlager zur radial steifen, leicht drehbaren Lagerung der Welle, einem Antriebskörper, zumindest zwei Aktoren zum Erregen des Antriebskörpers und der Welle relativ zueinander zum Versetzen der Welle in eine Rotation relativ zum Antriebskörper und einem Basiselement, an dem diese Komponenten befestigt sind, wobei entweder gemäß einer Ausführungsform der Antriebskörper mit einer Antriebskörperöffnung ausgebildet ist und die Welle in die Antriebskörperöffnung zumindest hineinführt, oder gemäß einer anderen Ausführungsform die Welle als eine Hohlwelle ausgebildet ist und ein Element des Antriebskörpers mit ring- oder scheibenförmigem Umfang darin angeordnet ist. Dabei ist der Antriebskörper relativ zum Basiselement feststehend angeordnet. Die Welle ist mittels des Drehlagers leicht drehbar relativ zu den Festkörperaktoren angeordnet und ist mittels der Festkörperaktoren in der Ebene senkrecht zur Wellenachse bzw. in radialer und tangentialer Richtung der Welle relativ zum Basiselement verstellbar. Die antreibende Richtungskomponente liegt dabei in der Ebene senkrecht zur Wellenachse, wobei ggf. Taumelbewegungen aufgrund z.B. einer ortsfesten Drehlagerung eines durch die Welle angetriebenen Elements auftreten können.

Vorteilhaft bei einer solchen Festkörperaktor-Antriebsvorrichtung ist, dass auf die Aktoren keine Drehmoment-Belastung oder allenfalls eine nur noch geringe Drehmoment-Belastung einwirkt. Dafür wird eine auf den ersten Blick abwegige Wellenvibration bzw. transversale Bewegung der Welle in deren radialer Richtung in Kauf genommen. Bei näherer Betrachtung ist jedoch festzustellen, dass die transversalen Bewegungen der Welle derart gering sind, dass diese vernachlässigbar oder kompensierbar sind. Entscheidender Vorteil ist, dass die Biegebelastung und insbesondere die damit einhergehenden stark schädigenden Zugspannungen in Teilen des Aktorwerkstoffes, hervorgerufen durch an der Welle angreifende und im Stand der Technik an die Aktoren übertragene Drehmomentlasten hier prinzipbedingt vermieden wird, indem die Aktoren durch eine Drehlagerung relativ zur Welle von einer Drehmomentlast an der Welle entkoppelt werden. Drehmomentlasten an der Welle können nicht mehr derart auf die Aktoren einwirken, dass die Aktoren mit der Zeit zu stark geschädigt oder gar zerstört werden.

Weiterhin vorteilhaft bei einer solchen Festkörperaktor-Antriebsvorrichtung ist, dass die Aktoren relativ zum Basiselement nicht rotieren, wodurch der elektrische Anschluss der Aktoren erleichtert wird.

Bevorzugt wird insbesondere auch eine Ausführungsform auf Basis einer Festkörperaktor-Antriebsvorrichtung mit einer Welle, einem Drehlager, einem Antriebskörper, zumindest zwei Aktoren zum Erregen des Antriebskörpers und der Welle relativ zueinander zum Versetzen der Welle in eine Rotation relativ zum Antriebskörper und einem Basiselement, an dem diese Komponenten befestigt sind, wobei entweder der Antriebskörper mit einer Antriebskörperöffnung ausgebildet ist und die Welle in die Antriebskörperöffnung zumindest hineinführt, oder die Welle als eine Hohlwelle ausgebildet ist und ein Element des Antriebskörpers mit ring- oder scheibenförmigem Umfang darin angeordnet ist und wobei der Antriebskörper relativ zum Basiselement feststehend angeordnet ist, die Aktoren und/oder die daran insbesondere mitrotierbar angeordnete Welle an dem Drehlager angeordnet und relativ zu dem Antriebskörper rotierbar sind und die Welle mittels der Aktoren in radialer Richtung der Welle relativ zum Basiselement verstellbar angeordnet ist. Gemäß dieser weiter modifizierten Ausführungsform werden die Aktoren einerseits mit der Welle insbesondere steif verbunden und andererseits relativ zum Basiselement drehbar gelagert. Dadurch sind die Aktoren ebenfalls drehmomentfrei, rotieren aber mit der Welle mit.

Der allgemeine Grundgedanke der verschiedenen Ausgestaltungen besteht darin, dass der eine oder gegebenenfalls auch mehrere Antriebskörper relativ zu einem Basiselement feststehend angeordnet sind und die Welle unter Inkaufnahme einer transversalen Bewegung der Welle relativ zu dem Basiselement verstellbar angeordnet ist.

Bevorzugt wird insbesondere eine solche Festkörperaktor-Antriebsvorrichtung, bei welcher der Antriebskörper am Basiselement fest befestigt ist. Mit anderen Worten ist der Antriebskörper relativ zu einem Basiselement ortsfest angeordnet, vorzugsweise und optional unter Zwischenschaltung weiterer starrer Elemente an einem solchen Basiselement angeschraubt, angeschweißt oder auf sonstige Art und Weise fest befestigt.

Vorteilhaft sind zwei Antriebskörper mit je einer Antriebskörperöffnung, wobei die Welle mit beiden Antriebskörpern zusammenwirkt. Bei einer solchen Anordnung sind entsprechend beide Antriebskörper oder gegebenenfalls auch noch mehr Antriebskörper relativ zum Basiselement feststehend angeordnet. Vorteilhaft an einer solchen Anordnung ist, dass an zwei voneinander beabstandeten Stellen in Längsrichtung der Welle eine Antriebskraft auf die Welle einwirkt und dadurch ein stabiler und vorzugsweise kippfreier Antrieb der Welle erfolgt.

Die zwei Antriebskörper sind bevorzugt über ein Verbindungselement miteinander verbunden und über das Verbindungselement am Basiselement befestigt. Eine solche Ausgestaltung bietet vorteilhaft eine feste Anordnung der beiden Antriebskörper relativ zueinander und zugleich eine beabstandete Befestigungsmöglichkeit der beiden Antriebskörper parallel zueinander an einem gemeinsamen Basiselement.

Zwei Drehlager, welche über jeweils zumindest einen der Aktoren an je zumindest einen solchen Antriebskörper gekoppelt sind, werden bevorzugt eingesetzt. Zwei oder mehr solche Drehlager bieten vorteilhafterweise die Möglichkeit, die Welle verkippungsfrei durch zwei zueinander beabstandete Drehlager zu führen. Die beiden Drehlager sind vorzugsweise über ein Verbindungselement miteinander verbunden und über das Verbindungselement mittels der Aktoren mit dem Antriebskörper gekoppelt.

Vorteilhaft ist eine solche Festkörperaktor-Antriebsvorrichtung mit einer Detektionseinrichtung zum Bestimmen eines auf die Welle einwirkenden Drehmoments durch Abgreifen von linear auf die Aktoren wirkenden Lasten. Nachdem eine direkte Drehmoment-Übertragung auf die Aktoren durch die verschiedenen Ausführungsformen gerade vorteilhaft vermieden wird, kann überraschenderweise trotzdem eine Drehmoment-Bestimmung eines auf die Welle einwirkenden Drehmoments durchgeführt werden. Dadurch kann beispielsweise die Steuereinrichtung mittels eines geeigneten Algorithmus linear auf die Aktoren wirkenden Lasten ermitteln, wozu gegebenenfalls auf die Aktoren aufgeprägte Steuerströme oder Steuerspannungen herausgerechnet werden, um durch letztendlich derart bestimmte Werte auf ein solches Drehmoment rückschließen zu können. Die Detektionseinrichtung wird somit vorteilhaft durch die Aktoren und die zur Ansteuerung bereitgestellte Steuereinrichtung oder gegebenenfalls auch eine dazu getrennt bereitgestellte Schaltungs- oder Steueranordnung umgesetzt.

Bevorzugt wird eine solche Festkörperaktor-Antriebsvorrichtung mit einer Koppeleinrichtung, welche zwischen der Welle und einem durch die Welle anzutreibenden Element angeordnet ist, wobei die Koppeleinrichtung ausgebildet ist zum Übertragen einer Rotationsbewegung zwischen der Welle und dem anzutreibenden Element und zum Entkoppeln einer Bewegung der Welle in der radialen Richtung. Mittels einer solchen Koppeleinrichtung wird somit vorteilhaft die transversale Bewegung der Welle relativ zu dem Basiselement bei der Übertragung auf das durch die Welle anzutreibende Element herausgekoppelt, so dass das anzutreibende Element nicht ebenfalls eine solche transversale Bewegung ausübt. Auf einfach Art und Weise kann eine Koppeleinrichtung beispielsweise durch eine für sich bekannte Balg-Kupplung umgesetzt sein.

Das Basiselement ist insbesondere ein Gehäuse einer Antriebsvorrichtung oder ein Gestell, wobei das Gehäuse bzw. das Gestell den Antriebskörper mit einer übergeordneten Vorrichtung fest verbinden.

Funktionell wird somit ein elektro-mechanischer Motor auf dem Wirkprinzip einer Festkörperaktor-Antriebsvorrichtung bereitgestellt, bei welchem eine Drehmoment-Belastung am Antriebselement über die Welle bzw. Hohlwelle direkt an eine Motorhalterung in Form des Basiselements übertragen wird. Vorteilhaft ist dabei, dass die Aktoren sich nicht im Übertragungsweg des Drehmoments befinden. Durch das Zusammenwirken der Aktoren und mindestens einer Drehlagerung können vorteilhaft nur radiale Kräfte auf die Antriebswelle bzw. das Antriebselement übertragen werden. Vorzugsweise wird eine Entkopplung der transversalen Bewegung des Antriebselements, das heißt der Welle bzw. Hohlwelle für die Übertragung der Rotation zwischen der Welle und dem anzutreibenden Element über beispielsweise eine Balg-Kupplung vorgesehen.

Neben Festkörperaktoren in mehrschichtiger PMA-Bauweise sind auch Ausführungen mit andersartigen Festkörperaktoren einsetzbar, beispielsweise magnetostriktive, elektrostriktive oder elektromagnetisch wirkende Festkörperaktoren.

Ein Ausführungsbeispiel wird nachfolgend anhand der Zeichnung näher erläutert. Soweit in den verschiedenen Figuren gleiche Bezugszeichen verwendet werden, werden jeweils gleiche oder gleich wirkende Komponenten bzw. Funktionen bezeichnet. Diesbezüglich wird jeweils auf die entsprechenden Ausführungen bei der Beschreibung zu auch den anderen Figuren verwiesen. Es zeigen:
- Fig. 1: schematisch Komponenten einer bevorzugten Festkörperaktor-Antriebsvorrichtung mit Festkörperaktoren in Draufsicht und in seitlicher Schnittansicht gemäß einer ersten Ausführungsform,
- Fig. 2: schematisch Komponenten einer bevorzugten Festkörperaktor-Antriebsvorrichtung mit Festkörperaktoren in Draufsicht und in seitlicher Schnittansicht gemäß einer zweiten Ausführungsform,
- Fig. 3: schematisch Komponenten einer bevorzugten Festkörperaktor-Antriebsvorrichtung mit Festkörperak- toren in Draufsicht und in seitlicher Schnittansicht gemäß einer dritten Ausführungsform,
- Fig. 4: schematisch Komponenten einer bevorzugten Festkörperaktor-Antriebsvorrichtung mit Festkörperaktoren in Draufsicht und in seitlicher Schnittansicht gemäß einer vierten Ausführungsform und
- Fig. 5: schematisch Komponenten einer bevorzugten Festkörperaktor-Antriebsvorrichtung mit Festkörperaktoren in Draufsicht und in seitlicher Schnittansicht gemäß einer Ausführungsform des Standes der Technik.

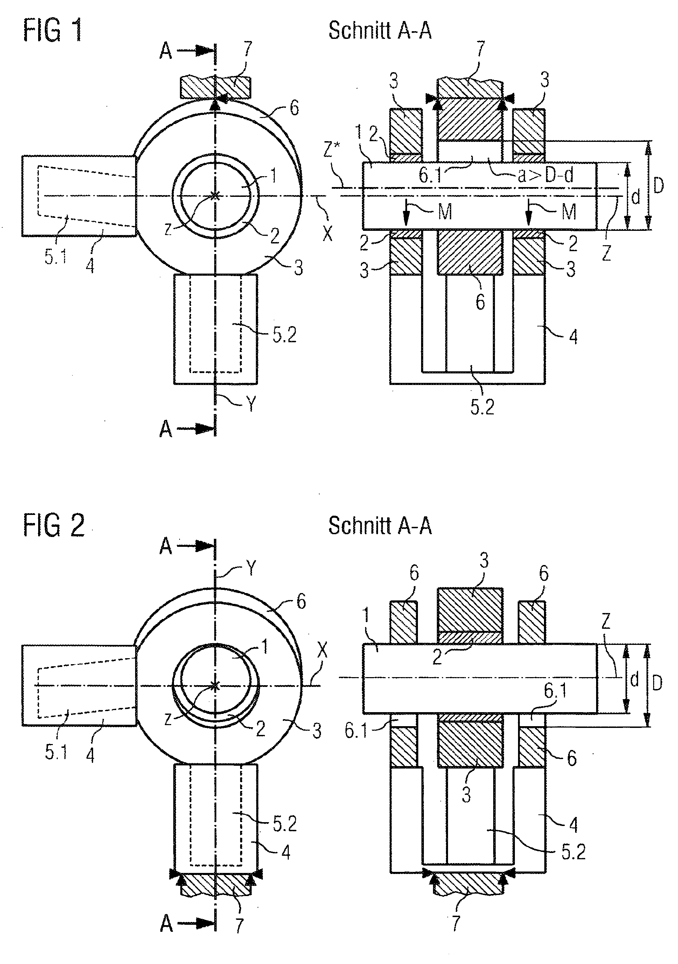

Wie dies aus Fig. 1 ersichtlich ist, besteht eine beispielhafte Festkörperaktor-Antriebsvorrichtung aus einer Vielzahl von Einzelkomponenten, wobei die dargestellten Komponenten um weitere Komponenten ergänzbar sind bzw. gegen gleich wirkende Komponenten anderer Bauart austauschbar sind.

Die Festkörperaktor-Antriebsvorrichtung weist ein lediglich schematisch skizziertes Gehäuse oder Gestell 7 auf, welches die weiteren Komponenten aufnimmt oder trägt. In dem Gehäuse ist mittels einer Lageranordnung eine Welle 1 angeordnet, wobei sich eine Wellenachse Z der Welle 1 in axialer Richtung aus dem Gehäuse heraus erstreckt. Zum Versetzen der Welle 1 um die Wellenachse Z in eine Wellenrotation dient eine Antriebsvorrichtung.

Die Antriebsvorrichtung besteht im Wesentlichen aus vorzugsweise zwei oder mehr linear wirkenden Aktoren 5.1, 5.2 in Form von vorzugsweise Festkörperaktoren und einem Antriebskörper 6. Außerdem weist die Antriebsvorrichtung einen Lagerhalter 3 sowie ein oder mehrere Drehlager 2 auf.

Bei der dargestellten Ausführungsform ist der Lagerhalter 3 zugleich ein Verbindungselement ausbildend aus einem seitlich geöffneten U-förmigen Element aufgebaut, wobei die beiden zueinander parallelen Schenkel des Lagerhalters 3 radial zur Wellenachse Z verlaufen. In dem Lagerhalter 3 sind die beiden Drehlager 2 angeordnet, durch welche die Welle 1 hindurchführt. Im Wesentlichen ist die Welle 1 somit in zumindest einem Drehlager 2, vorzugsweise zur Stabilisierung gegen ein Verkippen in zwei Drehlagern 2 drehbar aber in ihrer radialen Richtung fest im Lagerhalter 3 gelagert.

Der Antriebskörper 6 weist eine kreisförmige Antriebskörperöffnung 6.1 auf, welche insbesondere als Durchgangsöffnung durch den Antriebskörper 6 hindurch ausgebildet ist. Die Welle 1 führt durch die Antriebskörperöffnung 6.1 hindurch oder zumindest in diese hinein. Ein Außendurchmesser der Welle 1 als ein erster Durchmesser d ist dabei geringer als ein Innendurchmesser der Antriebskörperöffnung 6.1 als ein zweiter Durchmesser D. Das Verhältnis der beiden Durchmesser d, D ist derart, dass eine maximale Aktorauslenkung a der Aktoren 5.1, 5.2 größer als die Differenz der beiden Durchmesser ist, das heißt es gilt a > (D - d). Der Antriebskörper 6 wird zum Antreiben der Welle 1 durch die Aktoren 5.1, 5.2 derart verstellt, dass eine Wellen-Außenwandung der Welle 1 vorzugsweise durchgehend mit einer Antriebskörper-Innenwandung in Reibkontakt steht, so dass durch eine geeignete Ansteuerung des Antriebskörpers 6 mittels der Aktoren 5.1, 5.2 dieser in eine Bewegung versetzt wird, welche die Welle 1 in eine WellenRotation versetzt.

Zum Antreiben der Aktoren 5.1, 5.2 weist die Festkörperaktor-Antriebsvorrichtung eine Steuereinrichtung C als integrierte oder gegebenenfalls auch als eigenständige externe Komponente auf. Die Steuereinrichtung C ist in üblicher Art und Weise über Leiter mit den Aktoren 5.1, 5.2 verbunden, um an den Aktoren 5.1, 5.2 je nach Ausgestaltung Ladungen oder Spannungen anzulegen, damit sich die Aktoren 5.1, 5.2 entsprechend der Ansteuerung in ihrer Längsrichtung linear ausdehnen und/oder zusammenziehen.

Die Aktoren 5.1, 5.2 sind als Bindeglied zwischen dem Antriebskörper 6 und dem Lagerhalter 3 derart angeordnet, dass über den Lagerhalter 3 und die Drehlager 2 die Welle 1 relativ zum Antriebskörper 6 in eine translatorische, pseudokreisförmige Bewegung relativ zum Antriebskörper 6 versetzt wird. Mit anderen Worten rotiert die Wellenachse Z der Welle 1 durch eine geeignete Ansteuerung der Aktoren 5.1, 5.2 um eine Antriebskörperöffnungsachse Z*, welche achsparallel zur Wellenachse Z verläuft und eine Mittenachse durch die Antriebskörperöffnung 6.1 ausbildet. Entgegen bekannter Ausführungsformen ist jedoch nicht der Lagerhalter 3 mit den Drehlagern 2 fest an dem Gestell 7 bzw. Gehäuse verbunden sondern bei den verschiedenen Ausführungsformen der Antriebskörper 6 fest mit dem Gestell 7 verbunden.

Zusammengefasst besteht der wesentliche Aufbau einer derart bevorzugten Festkörperaktor-Antriebsvorrichtung aus einem Gestell 7, an welchem der Antriebskörper 6 fest befestigt ist sowie aus den Aktoren 5.1, 5.2, welche den Lagerhalter 3 zum Lagern der Welle 1 verstellbar am Antriebskörper 6 befestigen. Dadurch ist der Antriebskörper 6 ortsfest am Gestell 7 angeordnet, während die Welle 1 relativ zum Antriebskörper 6 und damit auch relativ zum Gestell 7 eine geringfügige rotierende oder vibrierende Bewegung ausführt.

Die Anordnung der Aktoren 5.1, 5.2 zwischen dem Antriebskörper 6 und dem Lagerhalter 3 erfolgt zweckmäßig durch eine feste Verbindung an sowohl dem Antriebskörper 6 als auch an dem Lagerhalter 3. Vorzugsweise sind die Aktoren 5.1, 5.2 dabei an einem Abschnitt des Lagerhalters 3 fixiert, welcher achsparallel zur Wellenachse Z verläuft. Umsetzbar sind jedoch auch andere Ausführungsformen, bei welchen die Aktoren 5.1, 5.2 nicht zwingend fest befestigt zwischen dem Antriebskörper 6 und dem Lagerhalter 3 angeordnet sind, sondern lose zwischen diesen eingesetzt sind. Eine solche Anordnung ist beispielsweise dann möglich, wenn mehr als zwei Aktoren 5.1, 5.2 zwischen dem Lagerhalter.3 und dem Antriebskörper 6 derart angeordnet sind, dass zum Antreiben des Antriebskörpers 6 relativ zu den Drehlagern 2 bzw. relativ zum Lagerhalter 3 jeweils nur die ausdehnende Bewegung der Aktoren 5.1, 5.2 verwendet wird.

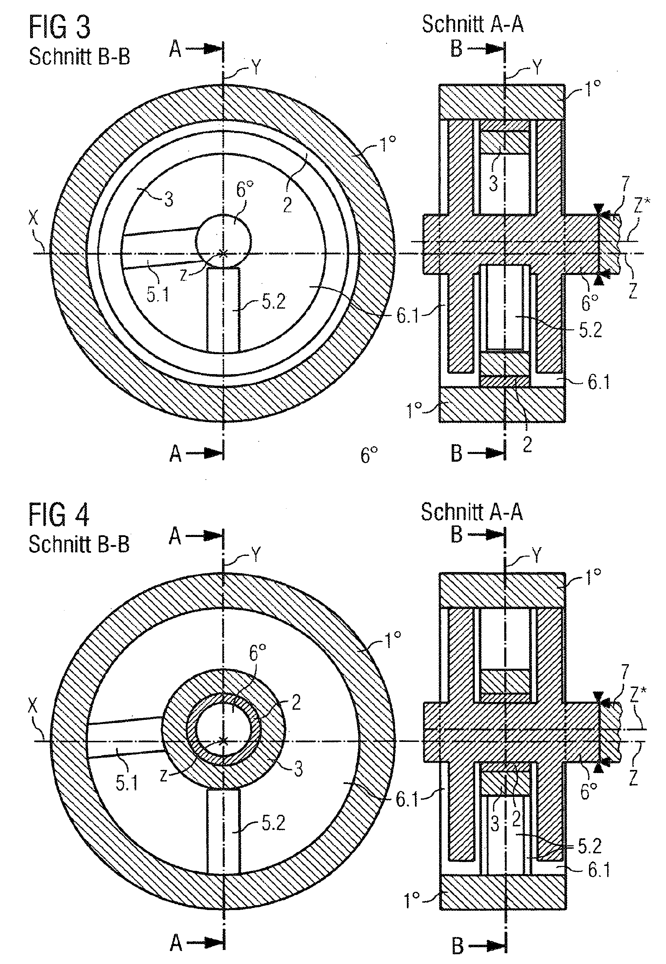

Fig. 1 zeigt somit stark abstrahiert den Aufbau einer ersten Ausführungsform, der sich von dem in Fig. 4 gezeigten Stand der Technik im Wesentlichen nur durch die Veränderung der Haltebedingung, symbolisiert durch schwarze Dreiecke, unterscheidet. Dabei kann der bevorzugte Antriebskörper 6 als ruhend betrachtet werden, wohingegen das Basiselement 7, z.B. als Motorgehäuse, Lagerhalter, oder Brückenelemente mit den Drehlagern 2 und der Welle 1 durch die als Linearaktoren ausgebildeten Aktoren 5.1, 5.2 relativ zum Antriebskörper 6 bewegt werden.

Es kann als störend empfunden werden, dass die als Motorwelle einsetzbare Welle 1 nicht ruht, sondern durch die Aktoren 5.1, 5.2 parallel zur Motorachse, d.h. insbesondere zur Antriebskörperöffnungsachse Z* zu einer kreisförmigen Verschiebebewegung angeregt wird. Berücksichtigt man aber, dass der Verschiebeweg im Extremfall der Aktorauslenkung a bei derzeitigen Anwendungen höchstens bis zu 200 µm beträgt, so wird deutlich, dass mittels einfacher Maßnahmen zur Schwingungsentkopplung der Welle 1 vom anzutreibenden Element das Problem der Verschiebebewegung der Welle 1 leicht zu beheben ist. Dies ist z.B. durch eine Koppeleinrichtung in Form einer transversal weichen aber gegenüber Torsion steifen Balgkupplung einfach umsetzbar. Soweit Dimensionen angegeben werden, soll durch diese keine Beschränkung auf weitere umsetzbare Ausführungsformen mit davon abweichenden Dimensionen vorgesehen werden.

Die Drehlager 2 verhindern bei diesem Aufbau, dass auf die Aktoren 5.1, 5.2 ein an der Welle 1 angreifendes Last-Drehmoment M übertragen werden kann. Daher werden Biegebeanspruchungen der Aktoren sicher oder zumindest ausreichend sicher vermieden.

Bei der weiteren Ausführungsform gemäß Fig. 2 ist die Anordnung gemäß Fig. 1 derart modifiziert, dass die Welle 1 nicht durch die Antriebskörperöffnung 6.1 eines einzelnen Antriebskörpers 6 sondern durch die Antriebskörperöffnungen 6.1 von zwei zueinander beabstandeten Antriebskörpern 6 hindurchführt. Die Lagerung der Welle 1 erfolgt bei dieser Ausführungsform in nur einem einzigen Drehlager 2, welches in dem Lagerhalter 3 angeordnet ist. Der Lagerhalter 3 ist entsprechend nicht aus einem U-förmigen Element, sondern in einfacher Ausgestaltung aus einem z. B. quadratischen oder kreisförmigen Element ausgebildet. Die beiden Antriebskörper 6 sind über ein Brückenelement 4 fest miteinander verbunden, so dass sie eine gleichförmige Bewegung um eine gemeinsame Antriebskörperöffnungsachse Z* ausführen. Die Kopplung der Antriebskörper 6 mit dem Lagerhalter 3 erfolgt wiederum über Aktoren 5.1, 5.2, wobei die Aktoren 5.1, 5.2 bei der dargestellten Ausführungsform zwischen einer Außenwandung des Lagerhalters 3 und einer dieser gegenüberliegenden Wandung des Brückenelements 4 angeordnet sind. Bei dieser Ausführungsform sind die Antriebskörper 6 ebenfalls lagefest mit einem Gestell 7 verbunden, wobei die Verbindung mit dem Gestell 7 beispielsweise über das Brückenelement 4 als ein Verbindungselement erfolgt.

Fig. 2 zeigt somit eine zweite Ausführungsform eines derart aufbaubaren elektromechanischen Motors. Hierbei wird die Welle 1 radial steif aber drehbar durch ein solches Drehlager 2 in einem Lagerhalter 3 gelagert. Die Welle 1 mit ihrem als dem ersten Durchmesser d wird von zwei Antriebskörpern 6 mit jeweils einer als z.B. Ringbohrung ausgebildeten Antriebskörperöffnung 6.1 mit geringfügig größerem Bohrungsdurchmesser als dem zweiten Durchmesser D umfasst. Die Antriebskörper 6 werden mittels z.B. zweier Brückenelemente als dem Verbindungselement 4 mechanisch steif verbunden. Ein Brückenelement stellt zugleich einen Auflager für den als X-Aktor in X-Richtung quer zur Wellenachse Z wirkenden und angeordneten Aktor 5.1 und das andere Brückenelement einen Auflager für den als Y-Aktor in Y-Richtung quer zur X-Richtung und quer zur Wellenachse Z wirkenden und angeordneten Aktor 5.2 bereit.

Die Funktionselemente, d.h. die Antriebskörpern 6 und die Brückenelemente können als integrale Bestandteile eines ein- oder mehrteiligen Motorgehäuses ausgebildet sein. Am antriebseitigen Ende sind die linearen Aktoren 5.1, 5.2 vorzugsweise mechanisch steif mit dem Lagerhalter 3 verbunden. Durch eine geeignete Ansteuerung der elektromechanisch wirkenden Aktoren 5.1, 5.2 wird die Welle 1 in Form einer kreisförmigen Verschiebebewegung relativ zu den Antriebskörpern 6 verschoben, wodurch der Außendurchmesser der Welle 1 in den Antriebskörperöffnungen 6.1 abrollt. Hierdurch wird die Welle 1 rotiert. Die maximale Aktorauslenkung a, welche der zweifachen Auslenkungsamplitude entspricht, muss dazu im Fall einer reibungsgekoppelten Anordnung die Durchmesserdifferenz der beiden Durchmesser D, d übertreffen. Die Kraftübertragung zwischen den Antriebskörpern 6 und der Welle 1 erfolgt in diesem Falle reibschlüssig. Zur Verbesserung der Kraftübertragung und zur Vermeidung von Schlupf kann zwischen den Ringen und den dazu korrespondierenden Wellenabschnitten eine Verzahnung eingebracht werden.

Die mechanische Anbindung des Motors an die Motorhalterung erfolgt in diesem Falle über das Motorgehäuse, wieder symbolisiert durch die Dreiecke an einem der Verbindungselemente. Das Befestigungselement 7 in Form z.B. eines Motorgehäuses kann daher als ruhend betrachtet werden. Die Welle 1 und der Lagerhalter 3 werden relativ dazu bewegt. Die Kopplung der Welle 1 an das anzutreibende Element erfolgt zur Schwingungsentkopplung vorzugsweise über ein transversal weiches aber torsionssteifes Koppelelement, wie z.B. einer Balgkupplung.

Ein an der Welle 1 angreifendes Lastdrehmoment wird via Reib- oder Formschluss auf die Antriebskörper 6 bzw. auf das Befestigungselement übertragen und von dort direkt an die Motorhalterung weitergeführt. Über die Aktoren 5.1, 5.2 kann dank der Drehlagerung zwischen der Welle 1 und der Lagerhalter 3 keine Drehmomentübertragung von der Welle 1 zum Gehäuse erfolgen. Die linear wirkenden Aktoren 5.1, 5.2 werden daher durch Drehmomentlasten an der Welle 1 nicht auf Biegung beansprucht.

Diese zweite Motorvariante weist als Vorteil gegenüber der ersten Variante ein ruhendes Motorgehäuse auf. Die bewegte Masse ist bei der zweiten Variante idealerweise wesentlich geringer und die Schwingungsanregung im Bezug auf das Motorlager fällt daher idealerweise ebenfalls geringer aus.

Fig. 3 zeigt eine weiter modifizierte Ausführungsform, bei welcher eine Welle 1° als eine Hohlwelle oder glockenförmig ausgebildet ist. Innerhalb der Welle 1° sind ein oder mehr Antriebskörper 6° angeordnet. Ein solcher Antriebskörper 6° weist zumindest ein ring- oder scheibenförmiges Element 6.1° auf, dessen Durchmesser als ein erster Durchmesser d° geringfügig kleiner ist als ein Innendurchmesser der Welle 1, der als ein zweiter Durchmesser D° dient. Die Welle 1° wird wieder über zwei oder mehr Aktoren 5.1, 5.2 in eine translatorische Bewegung relativ zu dem Antriebskörper 6° versetzt. Dazu sind die Aktoren 5.1, 5.2 zwischen einem achsparallel zur Wellenachse Z verlaufenden Abschnitt des Antriebskörpers 6° und einen Lagerhalter 3 zum Lagern eines Drehlagers 2 gesetzt. Insbesondere bei einer Anordnung von drei oder mehr Aktoren 5.1, 5.2 müssen diese vorzugsweise nicht fest mit dem Antriebskörper 6° und dem Lagerhalter 3 verbunden werden, obgleich eine feste Verbindung bevorzugt wird. Bei dieser Anordnung sitzt das Drehlager 2 außenseitig um den Lagerhalter 3 führend zwischen dem Lagerhalter 3 und dem Innenumfang der als Hohlwelle ausgebildeten Welle 1°.

Als wesentlicher Aspekt ist auch bei dieser Ausführungsform der Antriebskörper 6° lagefest mit einem die Gesamtanordnung tragenden Gestell 7 verbunden.

Bei dieser Ausführungsform wird somit eine Motorvariante mit innerhalb des Antriebskörpers 6° liegenden Aktoren 5.1, 5.2 vorgestellt, bei der die Außenfläche des Antriebskörpers 6° eine Antriebsglocke antreibt, die mit einer Welle 1°verbunden ist bzw. selber eine Hohlwelle ausbildet.

Die darauf basierende Variante ist mit innerhalb einer zylindrischen Antriebsglocke bzw. Welle 1°, d.h. innerhalb von deren Innendurchmesser als zweitem Durchmesser D liegenden elektromechanischen linear wirkenden Aktoren 5.1, 5.2 ausgebildet. Die Aktoren 5.1, 5.2 sind lagerseitig mechanisch steif auf einem Stator 3 befestigt, welcher als eigenständige Komponente oder als ring- oder scheibenförmiges Element 6.1 des Antriebskörpers 6° ausgebildet ist. Der derart ausgebildete Motor wird am Stator, symbolisiert durch Dreiecke mit einem nicht gezeigten Motorhalter, z.B. einem Gestell oder Maschinenbett, befestigt. Der Stator weist mindestens eine zylindrische Scheibe auf, aus Symmetriegründen bevorzugt zwei zylindrischen Scheiben mit einem Außendurchmesser, der hier als erster Durchmesser d dient, und der nur geringfügig kleiner als der Innendurchmesser der Antriebsglocke bzw. Welle 1° gewählt wird. Die Welle 1° wird mittels des Drehlagers 2 radial steif aber drehbar an dem Lagerhalter 3 gelagert. An ihrem antriebseitigen Ende werden die elektromechanisch wirkenden Aktoren 5.1, 5.2 mechanisch steif mit dem Lagerhalter 3 verbunden. Durch eine geeignete Ansteuerung der Linearaktoren wird die Welle 1° mit dem Lagerhalter 3 und dem Drehlager 2 kreisförmig verschoben, so dass die Innenfläche der Welle 1° mit ihrem Durchmesser D auf den zylindrischen Außenflächen der Statorscheiben abrollt und dadurch in Rotation versetzt wird.

Die Durchmesserdifferenz zwischen dem Innendurchmesser der Antriebsglocke und dem Außendurchmesser der Statorscheiben muss bei reibschlüssiger Kraftübertragung wieder geringer sein, als die maximale Aktorauslenkung a > (D - d). Die Kraftübertragung zwischen der Innenfläche der Welle 1° und der Scheibenaußenfläche ist dann reibschlüssig. Durch das Aufbringen einer Verzahnung kann ebenso ein Formschluss mit den bekannten Vorteilen einer Verbesserung der Kraftübertragung und der Gewährleistung einer Schlupffreiheit erreicht werden.

Die Drehbewegung des derart ausgebildeten Motors wird an der Antriebsglocke bzw. Welle 1° abgegriffen. Die der Rotation überlagerte kreisförmige Verschiebebewegung der Welle 1° kann durch übliche Maßnahmen zur Schwingungsentkopplung, wie z.B. dem Einsetzen einer transversal weichen aber torsionssteifen Balgkupplung zwischen der Antriebsglocke bzw. Welle 1° und dem anzutreibenden Element leicht unterdrückt werden.

Greift ein Lastdrehmoment an der Welle 1° an, so wird dieses über die Statorscheiben an die Motorlagerung übertragen. Die Aktoren 5.1, 5.2 bleiben aufgrund des Drehlagers 2 drehmomentfrei und werden daher keiner oder keiner zu starken Biegebeanspruchung unterworfen. Möglich ist darüber hinaus eine Vielzahl weiterer Variationen, die auf demselben Grundaufbau basieren. So kann z.B. die Welle mittels der Festkörperaktoren in radialer Richtung der Welle relativ zum Basiselement verstellbar am Basiselement befestigt sein und außerdem der Antriebskörper ebenfalls direkt am Basiselement befestigt sein. In einem solchen Fall entfällt ein Verbindungselement bzw. das Basiselement selber bildet das Verbindungselement aus.

Außerdem müssen die Drehlager nicht als eigenständiges Element ausgebildet sein sondern können funktionell durch entsprechende Ausgestaltung z.B. einer Halterung oder eines Endabschnitts der Aktoren ausgebildet sein.

Fig. 4 zeigt schematisch Komponenten einer bevorzugten Festkörperaktor-Antriebsvorrichtung mit Festkörperaktoren in Draufsicht und in seitlicher Schnittansicht gemäß einer vierten Ausführungsform, welche im Wesentlichen auf der dritten Ausführungsform aufbaut. Der Unterschied besteht darin, dass sowohl die Welle 1° als auch die Aktoren 5.1, 5.2 gemeinsam und drehfest zueinander am Drehlager 2 angeordnet sind. Sowohl die Welle 1° als auch die Aktoren 5.1, 5.2 drehen sich somit relativ zu dem Antriebskörper 2°. In diesem Fall erfolgt der Strom- bzw. Spannungsanschluss der Aktoren an eine Steuereinrichtung z.B. induktiv oder über Schleifkontakte.

Gemäß noch weiteren Ausführungsformen kann das Prinzip der mit der Welle drehenden Aktoren auch auf das Konzept der ersten Ausführungsbeispiele übertragen werden. Möglich ist prinzipiell sogar eine Umsetzung, bei welcher die Aktoren über ein erstes Drehlager gegenüber der Welle und über ein zweites Drehlager gegenüber dem Antriebskörper drehbar gelagert sind.

## Patentansprüche

1. Festkörperaktor-Antriebsvorrichtung mit
- einer Welle (1; 1°),
- einem Drehlager (2) zur drehbaren Lagerung der Welle (1; 1°)
- einem Antriebskörper (6; 6°),
- zumindest zwei Aktoren (5.1, 5.2) zum Erregen des Antriebskörpers (6; 6°) und der Welle (1; 1°) relativ zueinander zum Versetzen der Welle (1; 1°) in eine Rotation relativ zum Antriebskörper (6; 6°) und
- einem Basiselement (7), an dem diese Komponenten befestigt sind, wobei
- entweder der Antriebskörper (6) mit einer Antriebskörperöffnung (6.1) ausgebildet ist und die Welle (1) in die Antriebskörperöffnung (6.1) zumindest hineinführt,
- oder die Welle (1°) als eine Hohlwelle ausgebildet ist und ein Element (6.1°) des Antriebskörpers (6°) mit ring- oder scheibenförmigem Umfang darin angeordnet ist,
**dadurch gekennzeichnet, dass**
- der Antriebskörper (6) relativ zum Basiselement (7) feststehend angeordnet ist und
- die Welle (1; 1°) in dem Drehlager (2) angeordnet und mittels der Aktoren (5.1, 5.2) in radialer und tangentialer Richtung der Welle (1; 1°) relativ zum Basiselement (7) verstellbar angeordnet ist.

2. Festkörperaktor-Antriebsvorrichtung mit
- einer Welle (1; 1°),
- einem Drehlager (2),
- einem Antriebskörper (6; 6°),
- zumindest zwei Aktoren (5.1, 5.2) zum Erregen des Antriebskörpers (6; 6°) und der Welle (1; 1°) relativ zueinander zum Versetzen der Welle (1; 1°) in eine Rotation relativ zum Antriebskörper (6; 6°) und
- einem Basiselement (7), an dem diese Komponenten befestigt sind, wobei
- entweder der Antriebskörper (6) mit einer Antriebskörperöffnung (6.1) ausgebildet ist und die Welle (1) in die Antriebskörperöffnung (6.1) zumindest hineinführt,
- oder die Welle (1°) als eine Hohlwelle ausgebildet ist und ein Element (6.1°) des Antriebskörpers (6°) mit ring- oder scheibenförmigem Umfang darin angeordnet ist,
**dadurch gekennzeichnet, dass**
- der Antriebskörper (6°) relativ zum Basiselement feststehend angeordnet ist,
- die Aktoren (5.1, 5.2) und/oder die daran insbesondere mitrotierbar angeordnete Welle (1°) an dem Drehlager (2) angeordnet und relativ zu dem Antriebskörper (6°) rotierbar sind und
- die Welle (1°) mittels der Aktoren in radialer und tangentialer Richtung der Welle (1°) relativ zum Basiselement (7) verstellbar angeordnet ist.

3. Festkörperaktor-Antriebsvorrichtung nach Anspruch 1 oder 2, bei welcher der Antriebskörper (6) am Basiselement fest befestigt ist.

4. Festkörperaktor-Antriebsvorrichtung nach einem vorstehenden Anspruch mit zwei Antriebskörpern (6) mit je einer Antriebskörperöffnung (6.1), wobei die Welle (1; 1°) mit beiden Antriebskörpern zusammenwirkt.

5. Festkörperaktor-Antriebsvorrichtung nach Anspruch 4, bei der die zwei Antriebskörper (6) über ein Verbindungselement (4) miteinander verbunden und über das Verbindungselement (4) am Basiselement befestigt sind.

6. Festkörperaktor-Antriebsvorrichtung nach einem vorstehenden Anspruch mit zwei Drehlagern (2), welche über jeweils zumindest einen der Aktoren (5.1, 5.2) an je zumindest einen solchen Antriebskörper (6) gekoppelt sind.

7. Festkörperaktor-Antriebsvorrichtung nach Anspruch 6, bei der die beiden Drehlager (2) über ein Verbindungselement (4) miteinander verbunden und über das Verbindungselement (4) mittels der Aktoren (5.1, 5.2) mit dem Antriebskörper (6) gekoppelt sind.

8. Festkörperaktor-Antriebsvorrichtung nach einem vorstehenden Anspruch mit einer Detektionseinrichtung zum Bestimmen eines auf die Welle einwirkenden Drehmoments (M) durch Abgreifen von linear auf die Aktoren (5.1, 5.2) wirkenden Lasten.

9. Festkörperaktor-Antriebsvorrichtung nach einem vorstehenden Anspruch mit einer Koppeleinrichtung, welche zwischen der Welle (1) und einem durch die Welle anzutreibenden Element angeordnet ist, wobei die Koppeleinrichtung ausgebildet ist zum Übertragen einer Rotationsbewegung zwischen der Welle und dem anzutreibenden Element und zum Entkoppeln einer Bewegung der Welle (1) in der radialen Richtung.

10. Festkörperaktor-Antriebsvorrichtung nach einem vorstehenden Anspruch, bei der das Basiselement ein Gehäuse einer Antriebsvorrichtung oder ein Gestell (7) ist, wobei das Gehäuse bzw. das Gestell den Antriebskörper (6; 6°) mit einer übergeordneten Vorrichtung fest verbinden.

## Claims

1. Solid-state actuator drive device having
- a shaft (1; 1°),
- a pivot bearing (2) for rotatable mounting of the shaft (1; 1°),
- a drive body (6; 6°),
- at least two actuators (5.1, 5.2) for energising the drive body (6; 6°) and the shaft (1; 1°) relative to one another to rotate the shaft (1; 1°) relative to the drive body (6; 6°) and
- a base element (7), to which these components are attached, wherein
- either the drive body (6) is designed with a drive body opening (6.1) and the shaft (1) at least passes into the drive body opening (6.1),
- or the shaft (1°) is designed as a hollow shaft and an element (6.1°) of the drive body (6°) with annular or disc-like periphery is arranged therein,
**characterised in that**
- the drive body (6) is arranged to be fixed relative to the base element (7) and
- the shaft (1; 1°) is arranged in the pivot bearing (2) and is arranged to be adjustable relative to the base element (7) by means of the actuators (5.1, 5.2) in radial and tangential direction of the shaft (1; 1°).

2. Solid-state actuator drive device having
- a shaft (1; 1°),
- a pivot bearing (2),
- a drive body (6; 6°),
- at least two actuators (5.1, 5.2) for energising the drive body (6; 6°) and the shaft (1; 1°) relative to one another to rotate the shaft (1; 1°) relative to the drive body (6; 6°) and
- a base element (7), to which these components are attached, wherein
- either the drive body (6) is designed with a drive body opening (6.1) and the shaft (1) at least passes into the drive body opening (6.1),
- or the shaft (1°) is designed as a hollow shaft and an element (6.1°) of the drive body (6°) with annular or disc-like periphery is arranged therein,
**characterised in that**
- the drive body (6°) is arranged to be fixed relative to the base element,
- the actuators (5.1, 5.2) and/or the shaft (1°) arranged thereon in particular to be co-rotatable are arranged on the pivot bearing (2) and can be rotated relative to the drive body (6°) and
- the shaft (1°) is arranged to be adjustable relative to the base element (7) by means of the actuators in radial and tangential direction of the shaft (1°).

3. Solid-state actuator drive device according to claim 1 or 2, in which the drive body (6) is attached firmly to the base element.

4. Solid-state actuator drive device according to a preceding claim, having two drive bodies (6) with in each case one drive body opening (6.1), wherein the shaft (1; 1°) cooperates with both drive bodies.

5. Solid-state actuator drive device according to claim 4, in which the two drive bodies (6) are connected to one another via a connecting element (4) and are attached to the base element via the connecting element (4).

6. Solid-state actuator drive device according to a preceding claim, having two pivot bearings (2), which are coupled to in each case at least one such drive body (6) via in each case at least one of the actuators (5.1, 5.2).

7. Solid-state actuator drive device according to claim 6, in which the two pivot bearings (2) are connected to one another via a connecting element (4) and are coupled to the drive body (6) via the connecting element (4) by means of the actuators (5.1, 5.2).

8. Solid-state actuator drive device according to a preceding claim, having a detection device for determining a torque (M) acting on the shaft by measuring loads acting linearly on the actuators (5.1, 5.2).

9. Solid-state actuator drive device according to a preceding claim, having a coupling device which is arranged between the shaft (1) and an element to be driven by the shaft, wherein the coupling device is designed to transfer a rotational movement between the shaft and the element to be driven and to uncouple a movement of the shaft (1) in the radial direction.

10. Solid-state actuator drive device according to a preceding claim, in which the base element is a housing of a drive device or a frame (7), wherein the housing or the frame firmly connect the drive body (6; 6°) to an overriding device.

## Revendications

1. Dispositif d'entraînement d'actionneur de corps solide comprenant
- un arbre (1 ; 1°),
- un palier rotatif (2) destiné au logement rotatif de l'arbre (1 ; 1°),
- un corps d'entraînement (6 ; 6°),
- au moins deux actionneurs (5.1, 5.2) destinés à exciter le corps d'entraînement (6 ; 6°) et l'arbre (1 ; 1°) l'un par rapport à l'autre pour amener l'arbre (1 ; 1°) en rotation par rapport au corps d'entraînement (6 ; 6°) et
- un élément de base (7) sur lequel sont fixés ces composants,
- soit le corps d'entraînement (6) est conçu avec une ouverture de corps d'entraînement (6.1) et l'arbre (1) est au moins guidé à l'intérieur de l'ouverture de corps d'entraînement (6.1),
- soit l'arbre (1°) est conçu comme un arbre creux et un élément (6.1°) du corps d'entraînement (6°) doté d'une périphérie annulaire ou circulaire est disposé dans ledit arbre,
**caractérisé en ce que**
- le corps d'entraînement (6) est monté fixe par rapport à l'élément de base (7) et
- l'arbre (1 ; 1°) est disposé dans le palier rotatif (2) et monté mobile par rapport à l'élément de base (7) au moyen des actionneurs (5.1, 5.2) dans la direction radiale et tangentielle de l'arbre (1 ; 1°).

2. Dispositif d'entraînement d'actionneur de corps solide comprenant
- un arbre (1 ; 1°),
- un palier rotatif (2),
- un corps d'entraînement (6 ; 6°),
- au moins deux actionneurs (5.1, 5.2) destinés à exciter le corps d'entraînement (6 ; 6°) et l'arbre (1 ; 1°) l'un par rapport à l'autre pour amener l'arbre (1 ; 1°) en rotation par rapport au corps d'entraînement (6 ; 6°) et
- un élément de base (7) sur lequel sont fixés ces composants,
- soit le corps d'entraînement (6) est conçu avec une ouverture de corps d'entraînement (6.1) et l'arbre (1) est au moins guidé à l'intérieur de l'ouverture de corps d'entraînement (6.1),
- soit l'arbre (1°) est conçu comme un arbre creux et un élément (6.1°) du corps d'entraînement (6°) doté d'une périphérie annulaire ou circulaire est disposé dans ledit arbre,
**caractérisé en ce que**
- le corps d'entraînement (6) est monté fixe par rapport à l'élément de base et
- les actionneurs (5.1, 5.2) et/ou l'arbre (1°) disposé dessus de manière à pouvoir notamment être entraîné par rotation avec ces derniers sont disposés sur le palier rotatif (2) et peuvent tourner par rapport au corps d'entraînement (6°) et
- l'arbre (1°) est monté mobile par rapport à l'élément de base (7) au moyen des actionneurs dans la direction radiale et tangentielle de l'arbre (1°).

3. Dispositif d'entraînement d'actionneur de corps solide selon la revendication 1 ou 2, dans lequel le corps d'entraînement (6) est fixé solidement sur l'élément de base.

4. Dispositif d'entraînement d'actionneur de corps solide selon une revendication précédente comprenant deux corps d'entraînement (6) dotés chacun d'une ouverture de corps d'entraînement (6.1), l'arbre (1 ; 1°) coopérant avec les deux corps d'entraînement.

5. Dispositif d'entraînement d'actionneur de corps solide selon la revendication 4, dans lequel les deux corps d'entraînement (6) sont reliés l'un à l'autre par un élément de liaison (4) et fixés sur l'élément de base par l'élément de liaison (4).

6. Dispositif d'entraînement d'actionneur de corps solide selon une revendication précédente comprenant deux paliers rotatifs (2) couplés par respectivement au moins un des actionneurs (5.1, 5.2) à respectivement au moins un tel corps d'entraînement (6).

7. Dispositif d'entraînement d'actionneur de corps solide selon la revendication (6), dans lequel les deux paliers rotatifs (2) sont reliés l'un à l'autre par un élément de liaison (4) et couplés par l'élément de liaison (4) au moyen des actionneurs (5.1, 5.2) au corps d'entraînement (6).

8. Dispositif d'entraînement d'actionneur de corps solide selon l'une quelconque des revendications précédentes comprenant un dispositif de détection destiné à déterminer un couple (M) agissant sur l'arbre par la mesure de charges agissant linéairement sur les actionneurs (5.1, 5.2).

9. Dispositif d'entraînement d'actionneur de corps solide selon une revendication précédente comprenant un dispositif d'accouplement disposé entre l'arbre (1) et un élément destiné à être entraîné par l'arbre, le dispositif d'accouplement étant conçu pour transférer un mouvement rotatif entre l'arbre et l'élément à entrainer et découpler un mouvement de l'arbre (1) dans la direction radiale.

10. Dispositif d'entraînement d'actionneur de corps solide selon une revendication précédente, dans lequel l'élément de base est un boîtier d'un dispositif d'entraînement ou un châssis (7), le boîtier ou le châssis reliant solidement le corps d'entraînement (6 ; 6°) à un dispositif prioritaire.
